# EUROPEAN PATENT SPECIFICATION

(11) **EP 2 865 570 B1**
(45) Date of publication and mention of the grant of the patent: **22.05.2019**
(21) Application number: 13806455.5
(22) Date of filing: 19.06.2013
(51) Int. Cl.: B60R 13/08, B62D 65/00, D04H 1/4342

(54) **SOUND ABSORBING AND SCREENING MATERIAL AND METHOD FOR MANUFACTURING SAME**
SCHALLABSORBIERENDES UND ABSCHIRMENDES MATERIAL UND VERFAHREN ZUR HERSTELLUNG DAVON
MATÉRIAU D'ÉCRAN ET D'ABSORPTION DES SONS ET PROCÉDÉ POUR SA FABRICATION

(30) Priority: 20.06.2012 KR 20120066309
(43) Date of publication of application: 29.04.2015
(73) Proprietor: Hyundai Motor Company, Seoul 137-938 (KR); Kia Motors Corporation, Seoul 137-938 (KR)
(72) Inventor: KIM, Keun Young, Yongin-si Gyeonggi-do 448-140 (KR); SEO, Won Jin, Suwon-si Gyeonggi-do 440-723 (KR)
(74) Representative: Isarpatent
(86) International application number: PCT/KR2013/005424
(87) International publication number: WO 2013/191474

(56) References cited:
- EP-A1- 1 022 375
- EP-A1- 1 262 586
- EP-A1- 1 942 141
- EP-A2- 0 189 189
- CN-A- 101 153 428
- DE-A1- 10 010 112
- JP-A- 2002 004 164
- JP-A- 2005 335 279
- JP-A- 2010 059 964
- JP-B2- 4 054 826
- KR-A- 20060 111 330
- US-A- 5 272 000

## Description

### [Technical Field]

The present invention relates to a sound-absorbing material and a method for preparing same. More particularly, the present invention provides a sound-absorbing material and a method of preparing the sound-absorbing material by impregnating a binder into a nonwoven fabric formed of a heat-resistant fiber. Therefore, the prepared sound-absorbing material according to the present invention may have superior sound-absorbing property, flame retardancy, heat resistance and heat-insulating property, thereby being applicable to parts operating at a temperature of 200 ºC or greater and being shapeable due to the binder.

### [Background Art]

Noise is inevitably generated in industry or by industrial products and may cause damages gradually. Accordingly, various methods may be considered to prevent or eliminate noise. In an exemplary effort to eliminate the noise, novel various sound-absorbing materials which may be capable of arresting, absorbing or insulating sound have been developed.

In related arts, sound-absorbing materials may be used in electric appliances such as air conditioner, refrigerator, washing machine, lawn mower, and the like; transportation such as vehicle, ship, airplane, and the like; and construction materials such as wall material, flooring material, and the like. The sound-absorbing material may also be used in other various industrial fields. In general, the sound-absorbing materials used in such industries may also require other properties, such as light-weightness, flame retardancy, heat resistance and heat-insulating property, depending on particular applications, in addition to good sound-absorbing property. Particularly, flame retardancy and heat resistance may be further required in sound-absorbing materials used in engines, exhaust systems, and the like, which operate at high temperature of 200 ºC or greater. Currently, aramid fibers may be one of the sound-absorbing materials having superior heat resistance.

In related arts, in order to provide properties such as flame retardancy, water repellency, and the like to a sound-absorbing material, many sound-absorbing materials made from a nonwoven fabric which may contain aramid fibers and a functional surficial material laminated thereon have been developed.

For example, Korean Patent Application Publication No. 2007-0033310 discloses a flame-retardant sound-absorbing material obtained from a nonwoven fabric layer in which a heat-resistant short aramid fibers and short thermoplastic polyester fibers are bridged and a surficial material layer formed of a wetlaid nonwoven fabric consisting of short aramid fibers are laminated with each other.

Japanese Patent Application Publication No. 2007-0039826 discloses a water-repellent sound-absorbing material obtained from a nonwoven fabric layer of a heat-resistant short aramid fiber or a blend of a short aramid fiber and a short thermoplastic polyester fiber or a surficial material layer treated with a water repellent laminated with the nonwoven fabric layer.

Japanese Patent Application Publication No. 2007-0138953 discloses a heat-resistant sound-absorbing material wherein a nonwoven fabric layer consisting of a heat resistance aramid fiber and a surficial material layer formed of a fiber sheet containing a heat resistance aramid fiber are laminated with each other.

EP-A-0189189, EP-A-1262586 and EP-A-1022375 disclose a material comprising nonwoven fabric comprising a heat-resistant fiber; and a binder impregnated in the same layer as the nonwoven fabric, and maintaining a three-dimensional shape inside the nonwoven fabric. Since the sound-absorbing materials described above may have a structure in which a surficial material layer may be laminated on one side of a nonwoven fabric to provide properties such as flame retardancy, water repellency, and the like, a hot pressing process for integrating the nonwoven fabric layer and the surficial material layer may be necessary. Consequently, the overall process may be complicated and troublesome. Further, providing other properties, such as a flame retardant, water repellent, and the like by additives may cause undesirable toxic gases generated by combustion during the hot pressing process. In addition, deformation of the internal structure of the nonwoven fabric may occur during the hot pressing process, thereby deteriorating sound-absorbing property.

### [Disclosure]

### [Technical Problem]

The present invention may provide a technical solution to above-described technical difficulties. Accordingly, a novel sound-absorbing material, which may have superior sound-absorbing property, flame retardancy, heat resistance and heat-insulating property and be shapeable, is provided. In particular, in the novel sound-absorbing material, a binder may be impregnated into a nonwoven fabric having irregular micro cavities with a complicated three-dimensional labyrinth structure and may be cured while maintaining the three-dimensional shape inside the nonwoven fabric without blocking the micro cavities. Therefore, the physical properties of the nonwoven fabric including sound-absorbing property may be improved and a desired shape may be obtained during the curing of the binder.

In one aspect, the present invention provides a sound-absorbing material having superior sound-absorbing property, flame retardancy, heat resistance and heat-insulating property and being shapeable into a desired shape during curing process in which a binder may be impregnated into a nonwoven fabric formed of a heat-resistant fiber.

In other aspect, the present invention provides a method for preparing a sound-absorbing material by impregnating a binder into a nonwoven fabric formed of a heat-resistant fiber and drying the impregnated nonwoven fabric.

In another aspect, the present invention provides a method for reducing noise by using the sound-absorbing material in a noise-generating device.

### [Technical Solution]

In one exemplary embodiment of the present invention a sound-absorbing material is provided comprising:
a nonwoven fabric comprising an amount of about 30 wt% to about 100 wt% of a heat-resistant fiber; and
a binder impregnated in the same layer as the nonwoven fabric and maintaining a three-dimensional shape inside the nonwoven fabric, wherein the content of the binder is 30 parts to 150 parts by weight, based on 100 parts by weight of the nonwoven fabric, and
wherein micro cavities having a size in a range of about 1 µm to about 100 µm are formed inside a nonwoven fabric layer and formed by fibers which may be regularly or irregularly arranged with a distance therebetween in a range of about 0.1 µm to about 500 µm inside the nonwoven fabric layer, wherein the binder is a thermosetting resin.

In another exemplary embodiment of the present invention, a method for preparing a sound-absorbing material is provided comprising:
immersing a nonwoven fabric comprising an amount of about 30 wt% to about 100 wt% of a heat-resistant fiber in a binder solution; and
drying the nonwoven fabric till the content of the binder is 30 parts to 150 parts by weight, based on 100 parts by weight of the nonwoven fabric,
wherein micro cavities having a size in a range of about 1 µm to about 100 µm are formed inside a nonwoven fabric layer and formed by fibers which may be regularly or irregularly arranged with a distance therebetween in a range of about 0.1 µm to about 500 µm inside the nonwoven fabric layer, wherein the binder is a thermosetting resin.

In still another exemplary embodiment of the present invention, a method for reducing noise of a noise-generating device may include: i) checking a three-dimensional structure of a noise-generating device; ii) preparing and shaping a sound-absorbing material as defined in claim 1 so as to correspond to said three-dimensional structure of the device partially or entirely; and iii) locating the sound-absorbing material adjacent to the noise-generating device.

### [Advantageous Effects]

According to various exemplary embodiments of the present invention, when the binder is impregnated into the nonwoven fabric formed of a heat-resistant fiber, the sound-absorbing material may have superior sound-absorbing property, flame retardancy, heat resistance and heat-insulating property and the sound-absorbing material further may be shaped into a three-dimensional shape due to the binder.

In addition, in preparing the sound-absorbing material according to various exemplary embodiments, a hot pressing process for integrating a nonwoven fabric with a surficial material may be eliminated unlike other conventional sound-absorbing materials which may have laminated structures.

Further, the sound-absorbing material in various exemplary embodiments of the present invention may be prepared by including a functional additive in a binder solution, and desired functionality may be provided to the sound-absorbing material without laminating a surficial material, thereby providing advantages during manufacturing and fabricating process thereof.

Since flame retardancy, heat resistance and heat-insulating property of exemplary sound absorbing materials of the present invention may be superior in addition to sound-absorbing properties, the sound-absorbing material may not be deformed or denatured in a noise-generating device operating at a temperature of 200 ºC or greater.

In particular, as a thermosetting resin is used as a binder, a desired shape may be obtained during the curing of the thermosetting resin, thereby simplifying the overall process by simultaneous curing and shaping of the thermosetting resin. In addition, since a nonwoven fabric formed of a heat-resistant fiber is used, thermal deformation of the nonwoven fabric due to the reaction heat of thermal curing may not occur even when a thermosetting resin is used as a binder.

Accordingly, the sound-absorbing material in various exemplary embodiments of the present invention may be used for appliances requiring arresting, absorbing or insulating of sound, including electric appliances such as air conditioner, refrigerator, washing machine, lawn mower, and the like; transportation such as vehicle, ship, airplane, and the like; and construction materials such as wall material, flooring material, and the like. In particular, the sound-absorbing material of the present invention may be used for a noise-generating device operating at a temperature of 200 ºC or greater. More particularly, when the sound-absorbing material of the present invention is used in a vehicle, it may be closely attached to a noise-generating device of vehicle parts, such as engine, exhaust system, and the like, and may be provided with a distance from the noise-generating device, or being shaped as a part of the noise-generating device.

### [Brief Description of Drawings]

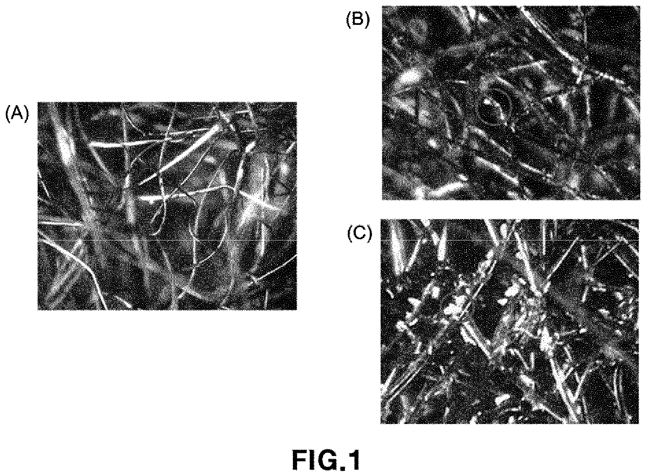

Fig. 1 shows electron microscopic images (x300) of an exemplary nonwoven fabric before and after impregnation of a binder according to an exemplary embodiment of the present invention. FIG. 1 (a) is a microscopic image of an exemplary nonwoven fabric before impregnation of a binder, FIG. 1 (b) is a microscopic image of a nonwoven fabric in which 20 parts by weight of an exemplary binder has been impregnated based on 100 parts by weight of the nonwoven fabric, and FIG. 1 (c) is a microscopic image of an exemplary nonwoven fabric in which 50 parts by weight of an exemplary binder has been impregnated based on 100 parts by weight of the nonwoven fabric.

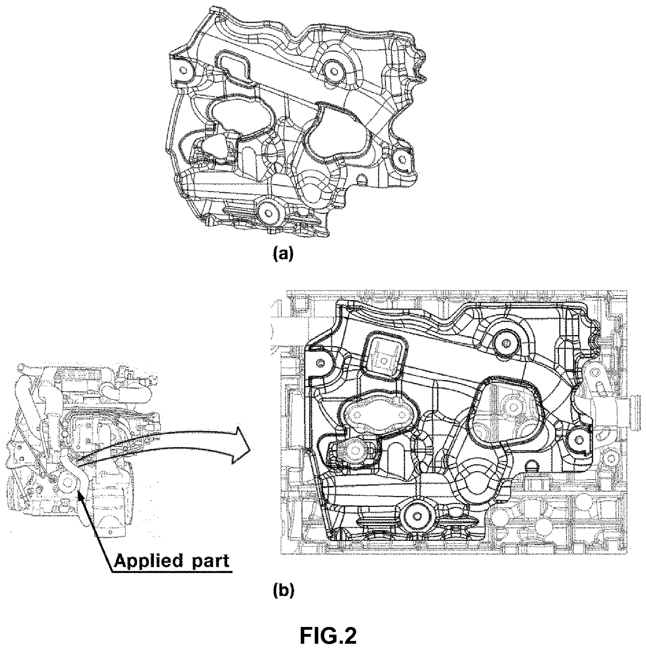

Fig. 2 schematically shows an example of a sound-absorbing material applied to an exemplary noise-generating device of a vehicle after shaping as a part, according to an exemplary embodiment of the present invention. FIG. 2 (a) illustrates an exemplary sound-absorbing material shaped for use in a vehicle engine, and FIG. 2 (b) illustrates an example of a sound-absorbing material which may be applied in a part of a vehicle engine.

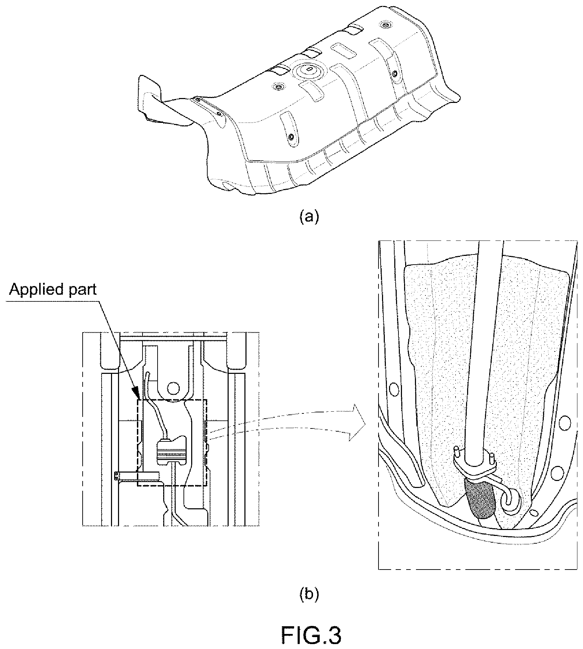

Fig. 3 schematically shows an example wherein a sound-absorbing material is applied to an exemplary noise-generating device of a vehicle at certain distance according to an exemplary embodiment of the present invention. FIG. 3(a) illustrates an exemplary sound-absorbing material shaped for use in an exemplary lower part of a vehicle, and FIG. 3 (b) shows an example of a sound-absorbing material which may be attached to a lower part of a vehicle.

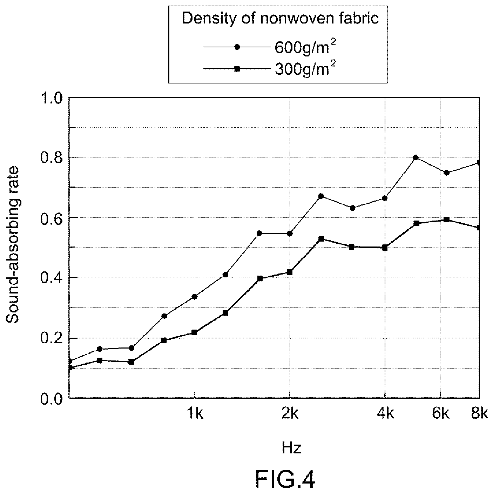

Fig. 4 is an exemplary graph showing sound-absorbing performance of a sound-absorbing material depending on a density of a nonwoven fabric according to an exemplary embodiment of the present invention.

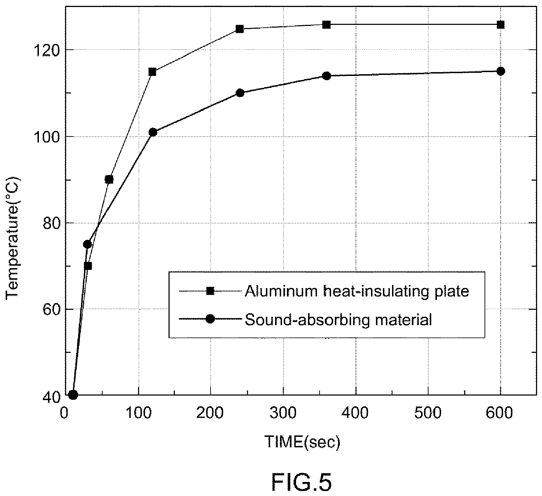

Fig. 5 is an exemplary graph showing heat-insulating performance in comparison of an aluminum heat-insulating plate and a sound-absorbing material according to an exemplary embodiment of the present invention.

### [Best Mode for Carrying Out Invention]

The present invention relates to a sound-absorbing material and a method for preparing the sound-absorbing material. The sound-absorbing material of the present invention may have superior sound-absorbing property, flame retardancy, heat resistance and heat-insulating property. Furthermore, the sound-absorbing material may be shapeable into a desired three-dimensional shape due to a binder which may be present in the same layer as the nonwoven fabric formed of a heat-resistant fiber.

In one aspect, the present invention provides a sound-absorbing material comprising:
a nonwoven fabric comprising an amount of about 30 wt% to about 100 wt% of a heat-resistant fiber; and
a binder impregnated in the same layer as the nonwoven fabric and maintaining a three-dimensional shape inside the nonwoven fabric, wherein the content of the binder is 30 parts to 150 parts by weight, based on 100 parts by weight of the nonwoven fabric, and
wherein micro cavities having a size in a range of about 1 µm to about 100 µm are formed inside a nonwoven fabric layer and formed by fibers which may be regularly or irregularly arranged with a distance therebetween in a range of about 0.1 µm to about 500 µm inside the nonwoven fabric layer, wherein the binder is a thermosetting resin.

In an exemplary embodiment of the present invention, the heat-resistant fiber may have a limiting oxygen index (LOI) of 25 % or greater and a heat resistance temperature of 200 ºC or greater.

In an exemplary embodiment of the present invention, the heat-resistant fiber may be one or more selected from the group consisting of aramid fiber, polyphenylene sulfide (PPS) fiber, oxidized polyacrylonitrile (oxi-PAN) fiber, polyimide (PI) fiber, polybenzimidazole (PBI) fiber, polybenzoxazole (PBO) fiber, polytetrafluoroethylene (PTFE) fiber, polyketone (PK) fiber, metallic fiber, carbon fiber, glass fiber, basalt fiber, silica fiber and ceramic fiber. In particular, the heat-resistant fiber may be an aramid fiber.

In an exemplary embodiment of the present invention, the nonwoven fabric may be a single-layer nonwoven fabric formed of an aramid fiber having a fineness in a range of 1 denier to 15 denier and a thickness in a range of 3 mm to 20 mm.

In an exemplary embodiment of the present invention, the nonwoven fabric may have a density in a range of 100 to 2000 g/m². In particular, the nonwoven fabric may have a density in a range of 200 to 1200 g/m².

In the present invention, the binder is a thermosetting resin. In particular, the thermosetting resin may be an epoxy resin which is capable of forming a three-dimensional network structure in the internal structure of the nonwoven fabric. The epoxy resin may be one or more epoxy resin selected from the group consisting of bisphenol A diglycidyl ether, bisphenol B diglycidyl ether, bisphenol AD diglycidyl ether, bisphenol F diglycidyl ether, bisphenol S diglycidyl ether, polyoxypropylene diglycidyl ether, bisphenol A diglycidyl ether polymer, phosphazene diglycidyl ether, bisphenol A novolac epoxy, phenol novolac epoxy resin and o-cresol novolac epoxy resin.

The structure of an exemplary sound-absorbing material according to the present invention will be described in more detail as shown in Fig. 1.

Fig. 1 shows electron microscopic images of an exemplary sound-absorbing material before and after impregnation of a binder into the nonwoven fabric and shows the three-dimensional network structure inside a nonwoven fabric. In particular, Fig. 1 (A) is an electron microscopic image of the internal structure inside a nonwoven fabric before impregnation of a binder into the nonwoven fabric and shows that heat-resistant fiber yarns cross each other to form irregular micro cavities. Each Fig. 1 (B) or (C) is an electron microscopic image of the internal structure inside the nonwoven fabric after impregnation of a binder into the nonwoven fabric and show that the binder is finely and uniformly distributed and attached to the heat-resistant fiber yarns. Further, the content of the binder on the yarn surface increases as the content of the binder increases.

Although there may be differences depending on the preparation method, fibers of a nonwoven fabric may be randomly arranged in a three-dimensional structure. Accordingly, the internal structure of a nonwoven fabric may have a substantially complicated labyrinth structure, which may be formed of regularly or irregularly arranged fibers, may be three-dimensionally interconnected, rather than bundles of independent capillary tubes. Thus, the nonwoven fabric according to various exemplary embodiments of the present invention may have irregular micro cavities formed as the yarns containing the heat-resistant fiber loosely cross each other.

Regarding the binder which is impregnated into the nonwoven fabric, the binder may be finely and uniformly distributed and attached on the surface of the nonwoven fabric yarns containing the heat-resistant fiber, thereby providing a much finer internal structure, micro cavities having labyrinth structure, than before the impregnation. Forming finely modified micro cavities in the internal structure of the nonwoven fabric may provide extended resonance path of sound or noise and further provide improved sound-absorbing property. When the binder forms a three-dimensional network structure as it is cured, the sound-absorbing property can be further improved by forming more and finer micro cavities inside the nonwoven fabric.

Accordingly, since the nonwoven fabric may maintain the intrinsic three-dimensional shape as the binder is uniformly impregnated into the nonwoven fabric, and additionally, since more fine micro cavities (Micro ventilator) may be formed as the binder is cured, the sound-absorbing material of the present invention may have remarkably improved sound-absorbing performance due to the maximized noise absorption through increased and various resonance of sound or noise in the nonwoven fabric.

As shown in exemplary electron microscopic images of Fig. 1, in an exemplary embodiment of the present invention, the binder may be uniformly dispersed and distributed on the surface of the heat-resistant fiber yarns constituting the nonwoven fabric of an exemplary sound absorbing material.

Hereinafter, the composition of the sound-absorbing material according to various exemplary embodiments of the present invention which may have an internal structure described above will be described in more detail.

In the present invention, a heat-resistant fiber is used as the main fiber included in the nonwoven fabric. The heat-resistant fiber may be any type having superior durability and high-temperature or ultrahigh-temperature resistance. In particular, the heat-resistant fiber may have a limiting oxygen index (LOI) of 25 % or greater and a heat resistance temperature of 150 ºC or greater. More particularly, the heat-resistant fiber may have a limiting oxygen index (LOI) in a range of 25 % to 80 % and a heat resistance temperature in a range of 150 ºC to 3000 ºC. Further, the heat-resistant fiber may have a limiting oxygen index (LOI) in a range of 25 % to 70% and a heat resistance temperature in a range of 200 ºC to 1000 ºC. In addition, the heat-resistant fiber may have a fineness in a range of 1 denier to 15 denier, or particularly of 1 denier to 6 denier; and a yarn length in a range of 20 mm to 100 mm, or particularly of 40 mm to 80 mm.

As used herein, a heat-resistant fiber may be 'super fiber' as generally known in the related art. In an exemplary embodiment, the super fiber may be one or more selected from the group consisting of aramid fiber, polyphenylene sulfide (PPS) fiber, oxidized polyacrylonitrile (oxi-PAN) fiber, polyimide (PI) fiber, polybenzimidazole (PBI) fiber, polybenzoxazole (PBO) fiber, polytetrafluoroethylene (PTFE) fiber, polyketone (PK) fiber, metallic fiber, carbon fiber, glass fiber, basalt fiber, silica fiber, and ceramic fiber.

In an exemplary embodiment of the present invention, an aramid fiber may be used as the heat-resistant fiber. In particular, meta-aramid (m-aramid), para-aramid (p-aramid) or a mixture thereof may be used as the heat-resistant fiber in the present invention. The aramid fiber used as the yarn of the nonwoven fabric may have a fineness in a range of 1 denier to 15 denier, or particularly of 1 denier to 6 denier; and a yarn length in a range of 20 mm to 100 mm, or particularly of 40 mm to 80 mm. When the yarn length is shorter than a predetermined length, bridging of yarns may be difficult during manufacturing, for instance, in needle punching. As a result, cohesion of the nonwoven fabric may be weak. In contrast, when the yarn length is longer than a predetermined length, cohesion of the nonwoven fabric may be superior but movement of yarns may be difficult during manufacturing, for instance, in carding.

As used herein, the aramid fiber is an aromatic polyamide fiber in which aromatic rings such as benzene ring are bonded with each other by amide groups. The aromatic polyamide fiber is typically called as 'aramid' and distinguished from an aliphatic polyamide, for example, nylon. The aramid fiber may be prepared by spinning of aromatic polyamide and classified as m-aramid [Chemical Formula 1], and p-aramid [Chemical Formula 2] depending on the location of the amid bonds on the aromatic ring.

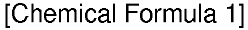

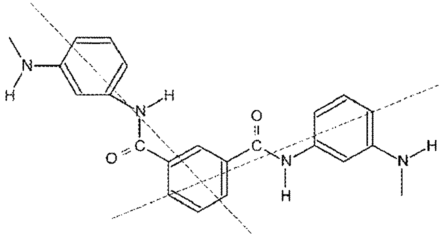

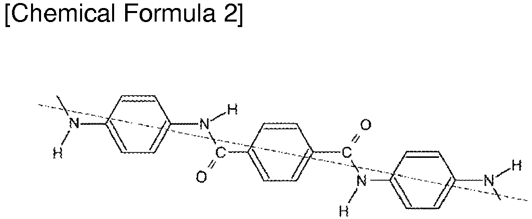

The m-aramid represented by Chemical Formula 1 may be prepared by dry spinning after dissolving isophthaloyl chloride and m-phenylenediamine in a dimethylacetamide (DMAc) solvent. The m-aramid may have a relatively high tensile elongation at break of in a range of 22 % to 40 % due to the uneven polymer structure, may be dyed and may be easily prepared into fibers. It is appreciated that Nomex™ (DuPont) and Conex™ (Teijin) may provide a range of options for the m-aramid.

The p-aramid represented by Chemical Formula 2 may be prepared by wet spinning after dissolving terephthaloyl chloride and p-phenylenediamine in an N-methylpyrrolidone (NMP) solvent. The p-aramid may have high strength due to its highly oriented linear molecular structure, and the strength of the p-aramid may be improved by about 3-7 folds compared to m-aramid. Therefore, the p-aramid may be used for reinforcement or protection materials. Also, the p-aramid may have substantial chemical resistance, reduced thermal shrinkage, superior dimensional stability, high tear strength, flame resistance and self-extinguishing property. It is appreciated that Kevlar™ (DuPont), Twaron™ (Teijin) and Technora™ (Teijin) may provide a range of options for the p-aramid.

In an exemplary embodiment, the aramid may be provided in a form of filament, staple, yarn, and the like. and may be used for reinforcing materials, for instance, a transformer, a motor and the like, insulating materials, for instance, insulating paper, insulating tape, and the like, heat-resistant fibers, for instance, fireproof clothing, gloves, and the like, high-temperature filters, or the like.

Although the nonwoven fabric used in the sound-absorbing material according to various embodiments of the present invention may be prepared from the heat-resistant fiber yarn or super fiber, nonwoven fabrics may be prepared by further adding other types of fibers to the heat-resistant fiber yarn, to reduce cost or provide the nonwoven fabric with light weightness, functionality, and the like, within the scope of the present invention. In other words, although the nonwoven fabric of the present invention may be prepared from the heat-resistant fiber yarn, the present invention may the nonwoven fabric formed only of the heat-resistant fiber. The nonwoven fabric of the present invention may include the heat-resistant fiber yarn in an amount of 30 wt% to 100 wt%, or particularly of 60 wt% to 100 wt%, based on the total weight of the nonwoven fabric.

Further, in the present invention, the sound-absorbing material includes a binder which is present in the same layer as the nonwoven fabric and maintains a three-dimensional shape inside the nonwoven fabric. Thus, the binder used may be any one capable of maintaining the three-dimensional shape inside the nonwoven fabric. As used herein, a language 'maintaining the three-dimensional shape inside the nonwoven fabric' may be interpreted that the binder, which is impregnated into the nonwoven fabric, may be uniformly distributed and attached to the surface of the fiber yarn of the nonwoven fabric and maintains the structure of or facilitates the formation of irregular micro cavities, thereby maintaining the original three-dimensional shape inside the nonwoven fabric.

In related arts, although a binder generally refers to a material used to adhere or join two materials, the term 'binder' as used herein may refer to a material impregnated into the nonwoven fabric formed of the heat-resistant fiber.

The binder impregnated into the nonwoven fabric is a thermosetting resin.

A thermoplastic resin (not being part of the claimed invention) such as a polyamide-based resin may include crystalline polar groups like the aramid fiber which is a representative heat-resistant fiber as described above. When a thermoplastic binder is impregnated into the nonwoven fabric formed of the thermoplastic heat-resistant fiber, a solid interfacial layer may be formed between the thermoplastic binder and the thermoplastic heat-resistant fiber due to face-to-face contact between the comparable crystalline polar groups, thereby partially blocking or covering the micro cavities of the nonwoven fabric. As consequence, when a thermoplastic resin would be used as the binder impregnated into the nonwoven fabric formed of the thermoplastic heat-resistant fiber, sound-absorbing performance may be reduced due to the partial blocking of the micro cavity of the nonwoven fabric which may provide a sound resonance path inside the nonwoven fabric. At a glimpse, it may be thought that the sound-absorbing performance would be improved if the micro cavities are blocked. Since noise is not eliminated inside the nonwoven fabric and is transmitted via outer routes of the nonwoven fabric, improvement of sound-absorbing performance may not be obtained if the thermoplastic binder is impregnated in the nonwoven fabric. In addition, when the thermoplastic binder is impregnated into a nonwoven fabric formed of the inorganic-based heat-resistant fiber, adhesive additive may be added to the binder because of weak adhesive property of the thermoplastic binder.

In contrast, a thermosetting binder, as used herein, may have significantly different physical and chemical properties from the thermoplastic heat-resistant fiber. Accordingly, when a thermosetting binder is impregnated into the nonwoven fabric formed of the thermoplastic heat-resistant fiber, an interfacial layer may be formed by edge-to-edge contact because of the different characteristics in phase. As a result, the micro cavities of the nonwoven fabric may remain open. Therefore, when a thermosetting resin is used as the binder impregnated into the nonwoven fabric formed of the heat-resistant fiber, the three-dimensional shape including micro cavities inside the nonwoven fabric may be maintained. Accordingly, a thermosetting resin is used as the binder according to the present invention.

In addition, the thermosetting resin may be curable with light, heat or a curing agent and its shape may not be deformed even at elevated temperatures. Accordingly, by using the heat-resistant fiber and the thermosetting binder in exemplary embodiments of the present invention, the shape of the sound-absorbing material may be maintained even at high temperature condition after shaping process. Therefore, when a thermosetting resin is used as the binder impregnated into the nonwoven fabric, shaping the nonwoven fabric to a desired shape may be achieved during the curing of the resin and the obtained shape may be maintained even at high temperatures.

As described above, when a thermosetting resin is used as the binder impregnated into the nonwoven fabric formed of the heat-resistant fiber, in addition to maintaining the three-dimensional shape inside the nonwoven fabric, shaping the nonwoven fabric into a desired shape during the curing of the binder resin may be obtained.

In an exemplary embodiment, an epoxy resin may be used as the binder. The epoxy resin, as used herein, may be a representative thermosetting resin and be curable into a polymer material having a three-dimensional network structure. Accordingly, since the epoxy resin may form a network structure and micro cavities therein when cured inside the nonwoven fabric, additional fine micro cavities may be formed inside the nonwoven fabric and the sound-absorbing performance may be further improved.

Further, a more complicated three-dimensional network structure may be formed when the curing is carried out in the presence of a curing agent, and thus the sound-absorbing effect may be further improved. In detail a three-dimensional network-structured polymer may be formed as the epoxide groups or hydroxyl groups of the epoxy resin react with the functional groups of the curing agent such as amine groups or carboxylic acid groups to form covalent crosslinkages. The curing agent may serve as a catalyst that catalyzes curing reaction and further be involved in the reaction and linked to the chemical groups of the epoxy resin. Accordingly, the size and physical properties of the micro cavities may be controlled by selecting different curing agents.

In an exemplary embodiment, the epoxy resin may be one or more selected from the group consisting of bisphenol A diglycidyl ether, bisphenol B diglycidyl ether, bisphenol AD diglycidyl ether, bisphenol F diglycidyl ether, bisphenol S diglycidyl ether, polyoxypropylene diglycidyl ether, bisphenol A diglycidyl ether polymer, phosphazene diglycidyl ether, bisphenol A novolac epoxy, phenol novolac epoxy resin, and o-cresol novolac epoxy resin. In particular, the epoxy resin may have an epoxy equivalent in a range of 70 to 400. When the epoxy equivalent is less than a predetermined value intermolecular binding may be significantly reduced to form the three-dimensional network structure or the physical properties of the sound-absorbing material may be insufficient because of reduced adhesion with the heat-resistant fiber. In contrast, when the epoxy equivalent is greater than a predetermined value, the physical properties of the sound-absorbing material may not be sufficient because of excessively dense network structure formed by the epoxy resin.

In an exemplary embodiment, when a thermosetting resin is used as a binder in the present invention, the curing agent may be included in a binder solution. As used herein, the curing agent may have a functional group that may react readily with the functional groups of the binder such as epoxide groups or hydroxyl groups. In particular, the curing agent may be an aliphatic amine, an aromatic amine, an acid anhydride, urea, an amide, imidazole, and the like. In an exemplary embodiment, the curing agent may be one or more selected from the group consisting of diethyltoluenediamine (DETDA), diaminodiphenylsulfone (DDS), boron trifluoride-monoethylamine (BF₃·MEA), diaminocyclohexane (DACH), methyltetrahydrophtalic anhydride (MTHPA), methyl-5-norbornene-2,3-dicarboxylic anhydride (NMA), dicyandiamide (Dicy), and 2-ethyl-4-methylimidazole. In an exemplary embodiment, an aliphatic amine- or amide-based curing agent may be used due to improved crosslinking ability, superior chemical resistance and weather resistance. In particular, dicyandiamide (Dicy) may be used in consideration of crosslinking ability, flame retardancy, heat resistance, storage stability, processability, and the like. Since dicyandiamide (Dicy) has a high melting point above 200 ºC, it may remain highly stable after being mixed with the epoxy resin and may provide sufficient processing time for curing and shaping.

In an exemplary embodiment of the present invention, a catalyst that facilitates the curing of the thermosetting resin used as the binder may be used. In particular, catalyst may be one or more selected from the group consisting of urea, dimethylurea, a tetraphenylborate salt of quaternary DBU, and quaternary phosphonium bromide. The catalyst may be included in the binder-containing solution.

In addition, various additives, for example, flame retardant, heat resistance improver, water repellent, and the like, may be used to provide additional functionalities to the sound-absorbing material. The additive may be included in the binder solution, and thus no additional surficial material for providing functionalities to the sound-absorbing material may be necessary.

In an exemplary embodiment, the flame retardant may be melamine, phosphate, metal hydroxide and the like. In particular, the flame retardant may be one or more selected from the group consisting of melamine, melamine cyanurate, melamine polyphosphate, phosphazene, and ammonium polyphosphate. More particularly, the flame retardant may be melamine, which may provide flame retardancy and heat resistance simultaneously.

In an exemplary embodiment, the heat resistance improver may be alumina, silica, talc, clay, glass powder, glass fiber, metal powder, and the like.

In an exemplary embodiment, one or more fluorine-based water repellent may be used as the water repellent.

In addition, additives commonly used in the related art may be selected depending on desired purposes.

In another aspect, the present invention provides a method for preparing a sound-absorbing material, which may include:
immersing a nonwoven fabric comprising an amount of about 30 wt% to about 100 wt% of a heat-resistant fiber in a binder solution; and
drying the nonwoven fabric till the content of the binder is 30 parts to 150 parts by weight, based on 100 parts by weight of the nonwoven fabric,
wherein micro cavities having a size in a range of about 1 µm to about 100 µm are formed inside a nonwoven fabric layer and formed by fibers which may be regularly or irregularly arranged with a distance therebetween in a range of about 0.1 µm to about 500 µm inside the nonwoven fabric layer, wherein the binder is a thermosetting resin.

Hereinafter, exemplary embodiments of each step of the method for preparing a sound-absorbing material will be described in detail.

In step a), a nonwoven fabric formed of a heat-resistant fiber is immersed in a binder solution. The nonwoven fabric is immersed in the binder solution to improve sound-absorbing and sound-insulating performance and to allow shaping of the sound-absorbing material into a desired shape. The binder solution may include a binder resin and further contain a curing agent, a catalyst, conventional additives and a solvent.

The binder, curing agent, catalyst and conventional additives included in the binder solution may be the same as described above. The solvent used to prepare the binder solution may be one or more selected from the group consisting of a ketone, a carbonate, an acetate, and a cellosolve. In particular, the solvent may be one or more selected from the group consisting of acetone, methyl ethyl ketone (MEK), methyl isobutyl ketone (MIBK), dimethyl carbonate (DMC), ethyl acetate, butyl acetate, methyl cellosolve, ethyl cellosolve, and butyl cellosolve.

In an exemplary embodiment, the binder solution may contain an amount of 1 wt % to 60 wt% of a binder; and a solvent as the remainder. In addition, the binder solution may further contain a curing agent and other additives including a catalyst. In particular, the binder solution may contain an amount of 1 wt% to 60 wt% of a binder, an amount of 0.1 wt% to 10 wt% of a curing agent, an amount of 0.01 wt% to 5 wt% of a catalyst, an amount of 1 wt% to 40 wt% of additives and a solvent as the remainder. More particularly, the binder solution may contain an amount of 1 wt % to 30 wt% of a binder, an amount of 0.1 wt% to 10 wt% of a curing agent, an amount of 0.01 wt% to 5 wt% of a catalyst, an amount of 1 wt% to 30 wt% of a flame retardant as an additive and an amount of 40 wt % to 95 wt% of a solvent.

In an exemplary embodiment, the degree of impregnation into the nonwoven fabric may be controlled by controlling the concentration of the binder solution. For example, the binder solution may be prepared to have a solid content in a range of 1 wt% to 60 wt%, or particularly of 20 wt % to 50 wt%. When the binder solution has less concentrated than a predetermined value, the purpose of the present invention may not be accomplished because the content of the binder impregnated into the nonwoven fabric is small. In contrast, when the binder solution is more concentrated than a predetermined value, the nonwoven fabric may become hard and may not serve as a good sound-absorbing material.

In addition, when the content of the curing agent contained in the binder solution is less than a predetermined amount, shaping to a desired shape may be difficult because curing of the binder may not be completed. As a result, the effect of improving the mechanical strength of the sound-absorbing material may not be achieved. And, when the content of the curing agent is greater than a predetermined amount, the sound-absorbing material may become hard and storage stability or the like may be unsatisfactory. Furthermore, when the content of the catalyst is less than a predetermined amount, the catalytic effect for facilitating reaction may not be sufficiently provided. In contrast, when the content of the catalyst is greater than a predetermined amount, stability and the like may be unsatisfactory. The additives may be one or more additive(s) conventionally used in the related art, which may include a flame retardant, a heat resistance improver, a water repellent and the like. The content of these additives may be adjusted adequately depending on the purpose of addition. When the amount of additives is less than a predetermined amount, the desired effect may not be achieved. And, when the amount of additives is greater than a predetermined amount, economical use thereof may not be obtained and undesired side effects may be caused.

In the present invention, in step b), the nonwoven fabric is dried. The drying step may be carried out by taking out the nonwoven fabric from the binder solution and removing the solvent. The drying may be carried out at appropriate temperatures under a pressure. In an exemplary embodiment, the drying may be carried out at a temperature in a range of 70 ºC to 200 ºC, or particularly of 100 ºC to 150 ºC. In addition, in the drying step, the content of the binder in the nonwoven fabric may be controlled and the physical properties of the sound-absorbing material may be controlled. Furthermore, the content of the binder included in the nonwoven fabric after the drying may determine the sizes, shapes and distribution of micro cavities inside the sound-absorbing material. Accordingly, the sound-absorbing property and mechanical property of the sound-absorbing material may be controlled therewith. According to the invention, the drying is carried out such that the final content of the binder is included in the nonwoven fabric in an amount of 4 30 parts to 150 parts by weight, based on 100 parts by weight of the nonwoven fabric.

In addition, the method for preparing a sound-absorbing material according to an exemplary embodiment of the present invention may further include, after the step b), a step of preparing a sound-absorbing material by shaping the dried nonwoven fabric at elevated temperature (step c). When the step c) is included, the method for preparing a sound-absorbing material may include: a) immersing a nonwoven fabric containing an amount of 30 wt% to 100 wt% of a heat-resistant fiber in a binder solution; b) drying the nonwoven fabric; and c) preparing a sound-absorbing material by shaping the dried nonwoven fabric at an elevated temperature. Particularly, in step c) is a step, a sound-absorbing material may be prepared by shaping the dried nonwoven fabric at the elevated temperature. The shaping at elevated temperature may include curing of the thermosetting binder and may be carried out at a temperature in a range of 150 ºC to 300 ºC, or particularly of 170 ºC to 230 ºC.

The method for preparing a sound-absorbing material according to an exemplary embodiment of the present invention may further include, before the step a), a step of forming a nonwoven fabric by needle punching of a heat-resistant fiber (step a-1). For example, in the step a-1), an aramid nonwoven fabric having a thickness in a range of 3 mm to 20 mm may be formed by needle punching of a heat-resistant aramid fiber of 1 denier to 15 denier.

When the step a-1) is further included, the method for preparing a sound-absorbing material may include: a-1) forming an aramid nonwoven fabric having a thickness in a range of 3 mm to 20 mm by needle punching of a heat-resistant aramid fiber of 1 denier to 15 denier; a) immersing a nonwoven fabric containing an amount of 30 wt% to 100 wt% of a heat-resistant fiber in a binder solution; and b) drying the nonwoven fabric.

In addition, the method for preparing a sound-absorbing material including the step a-1) according to the present invention may include: a-1) forming an aramid nonwoven fabric having a thickness in a range of 3 mm to 20 mm by needle punching of a heat-resistant aramid fiber of 1 denier to 15 denier; a) immersing a nonwoven fabric containing an amount of 30 wt% to 100 wt% of a heat-resistant fiber in a binder solution; b) drying the nonwoven fabric; and c) preparing a sound-absorbing material by shaping the dried nonwoven fabric at the elevated temperature.

In an exemplary embodiment, step a-1) of forming a nonwoven fabric may include needle punching of a heat-resistant fiber. Since the sound-absorbing property may vary depending on the thickness and density of the nonwoven fabric, the sound-absorbing property may be enhanced with the increase of the thickness and density of the nonwoven fabric.

In an exemplary embodiment, the nonwoven fabric may have a thickness in a range of 3 mm to 20 mm according to its application or parts of the sound-absorbing material used. When the thickness of the nonwoven fabric is less than 3 mm, the durability and shapeability of the sound-absorbing material may be unsatisfactory. In contrast, when the thickness is greater than 20 mm, productivity may decrease and production cost may increase during manufacturing and fabricating the nonwoven fabrics. In addition, the density of the nonwoven fabric may be in a range of 100 g/m² to 2000 g/m², of 200 g/m² to 1200 g/m², or particularly of 300 g/m² to 800 g/m², in the respects of performance and cost.

The aramid nonwoven fabric may be formed by stacking a web of 30 g/m² to 100 g/m² which is formed by carding 2 to 12 fold and continuously performing up-down preneedling, down-up needling and up-down needling, thereby forming physical bridges and providing the desired thickness, binding strength and other desired physical properties. The needle used to perform the needling may be a barb-type needle, having a working blade of 0.5 mm to 3 mm and a needle length measured as the distance from crank outside to point in a range of 70 mm to 120 mm. In addition, the needle stroke may be 30 times/m² -to 350 times/m².

In particular, the fineness of yarn for the nonwoven fabric may be in a range of 1.5 denier to 8.0 denier, the thickness of the pile layer may be in a range of 6 mm to 13 mm, the needle stroke may be in a range of 120 times/m² to 250 times/m², and the density of the nonwoven fabric may be in a range of 300 g/m² to 800 g/m².

The internal structure of the sound-absorbing material prepared by the method according to various exemplary embodiments described above may be confirmed using an electron microscope. When observed with an electron microscope, the sound-absorbing material of the present invention has micro cavities which may have a size in a range of 1 µm to 100 µm, and be distributed inside thereof. The micro cavities are distributed regularly or irregularly with a distances therebetween in a range of 0.1 µm to 500 µm.

In another exemplary embodiment, the present invention provides a method for reducing noise of a noise-generating device, including: i) checking the three-dimensional structure of a noise-generating device; ii) preparing and shaping a sound-absorbing material to provide the partial or entire three-dimensional structure of the device; and iii) installing the sound-absorbing material adjacent to the noise-generating device.

An exemplary noise-generating device, as used herein, may be a motor, an engine, an exhaust system, and the like. The sound-absorbing material may be provided in the three-dimensional structure of the device partially or entirely. In particular, the sound-absorbing material according to an exemplary embodiment of the present invention may be prepared and shaped during curing of the binder in the three-dimensional structure of the device partially or entirely.

Any operation with a language "adjacent", as used herein, may imply closely attaching the sound-absorbing material to the noise-generating device, whether by providing it at a distance from the noise-generating device, or by exactly shaping it as a part of the noise-generating device. Further, the operation with the language "adjacent" may include mounting the sound-absorbing material to a member connected to the noise-generating device, for example, another sound-absorbing material.

Fig. 2 and Fig. 3 schematically show exemplary vehicle parts or noise-generating device of a vehicle to which the sound-absorbing material according to an exemplary embodiment of the present invention may be applied.

In particular, Fig. 2 schematically shows noise-generating devices of a vehicle to which a sound-absorbing material may be applied after shaping as a part. Fig. 2(a) is a schematic view of an exemplary vehicle engine, and Fig. 2 (b) schematically illustrates an exemplary sound-absorbing material which may be shaped and applied in a part of a vehicle engine.

Fig. 3 schematically shows an exemplary sound-absorbing material which may be applied to a noise-generating device of a vehicle. Fig. 3 (a) schematically illustrates an exemplary lower part of a vehicle, and Fig. 3 (b) schematically illustrates an exemplary sound-absorbing material which may be shaped and attached to a lower part of a vehicle.

In various exemplary sound-absorbing material of the present invention, the binder may be impregnated to maintain the three-dimensional shape inside the nonwoven fabric, and the sound-absorbing material may have superior sound-absorbing property, flame retardancy, heat resistance and heat-insulating property. Accordingly, the desired sound-absorbing performance may be obtained when directly applied to a noise-generating device operating at a temperature of 200 ºC or greater, without deformation.

The present invention will be described in more detail through examples.

### [Examples] Preparation of sound-absorbing material

### Example 1. Preparation of sound-absorbing material using epoxy resin-impregnated aramid nonwoven fabric

A m-aramid short fiber having a limiting oxygen index (LOI) of 40%, a heat resistance at a temperature of 300 ºC, a fineness of 2 denier and a length of 51 mm may be air blown and formed into a web of 30 g/m² through carding. The web may be stacked by overlapping 10-fold on a conveyor belt operated at 5 m/min using a horizontal wrapper. An aramid nonwoven fabric having a density of 300 g/m² and a thickness of 6 mm may be prepared by continuously performing up-down needling, down-up needling and up-down needling with a needle stroke of 150 times/m².

The prepared nonwoven fabric may be immersed in a binder solution with 1 dip 1 nip, at pick-up rate of 300%. The binder solution may include 8 wt% of bisphenol A diglycidyl ether, 2 wt% of bisphenol A diglycidyl ether polymer, 0.2 wt% of dicyandiamide, 0.02 wt% of dimethylurea, 10 wt% of melamine cyanurate and 79.78 wt% of dimethyl carbonate (DMC).

The nonwoven fabric may be taken from the binder solution and dried at 150 ºC. The dried nonwoven fabric may contain 50 parts by weight of a binder based on 100 parts by weight of the nonwoven fabric.

The dried nonwoven fabric may be shaped into a desired shape by curing at 200 ºC for 2 minutes.

### Comparative Example 1. Preparation of sound-absorbing material using aramid nonwoven fabric

An aramid nonwoven fabric having a density of 300 g/m² and a thickness of 6 mm was prepared by needle punching as described in Example 1.

### Comparative Example 2. Preparation of sound-absorbing material using epoxy resin-coated aramid nonwoven fabric

An aramid nonwoven fabric having a density of 300 g/m² and a thickness of 6 mm may be prepared by needle punching as described in Example 1. Subsequently, a coating solution may be coated on the surface of the nonwoven fabric so that the content of a binder may be 50 parts by weight based on 100 parts by weight of the nonwoven fabric. Then, the nonwoven fabric may be shaped after drying at at a temperature of 150 ºC.

The coating solution may include 8 wt% of bisphenol A diglycidyl ether, 2 wt% of bisphenol A diglycidyl ether polymer, 0.2 wt% of dicyandiamide, 0.02 wt% of dimethylurea, 10 wt% of melamine cyanurate and 79.78 wt% of dimethyl carbonate.

### Comparative Example 3. Preparation of sound-absorbing material using thermoplastic resin-impregnated aramid nonwoven fabric

An aramid nonwoven fabric having a density of 300 g/m² and a thickness of 6 mm may be prepared by needle punching, immersed in a binder solution, dried and then shaped as described in Example 1.

The binder solution may be a thermoplastic resin solution including 10 wt% of polyethylene resin, 10 wt% of melamine cyanurate and 80 wt% of dimethyl carbonate.

### Comparative Example 4. Preparation of sound-absorbing material using epoxy resin-impregnated PET nonwoven fabric

A polyethylene terephthalate (PET) nonwoven fabric having a density of 300 g/m² and a thickness of 6 mm may be prepared by needle punching, immersed in a binder solution, dried and then shaped as described in Example 1.

The PET nonwoven fabric prepared in Comparative Example 4 was thermally deformed due to the reaction heat produced during the curing of epoxy and could not be shaped to a desired shape because it was completely thermally deformed during the drying and shaping processes.

### [Test Example]

### Evaluation of physical properties of sound-absorbing materials

The physical properties of the sound-absorbing materials of test samples were measured and compared as follows.

### 1. Evaluation of heat resistance

To evaluate heat resistance, the sound-absorbing material was aged in an oven at 260 ºC for 300 hours. After keeping at standard state, i.e., temperature of 23±2 ºC, relative humidity of 50±5%, for at least 1 hour, appearance was inspected and tensile strength was measured. It was visually inspected whether there were shrinkage or deformation, surface peeling, fluffing and cracking. The tensile strength was measured using a dumbbell-type No. 1 for randomly selected five sheets of test samples at a speed of 200 mm/min under a standard condition.

### 2. Evaluation of thermal cycle

The durability of the sound-absorbing material was evaluated by the thermal cycle test method. The durability was determined after performing five cycles.

### 1) Condition of one cycle

Room temperature → high temperature (150 ºC x 3hr) → room temperature → low temperature (-30 ºC x 3 hr) → room temperature → humid condition (50 ºC x 95% RH)

### 2) Durability evaluation standard

After the thermal cycle test, the change in appearance of each test sample was inspected. For example, surface damage, swelling, breaking and discoloring may be inspected. If there was no change in appearance, the sound-absorbing material was evaluated as 'no abnormality'.

### 3. Evaluation of flame retardancy

The flame retardancy of the sound-absorbing material was measured according to standard ISO 3795 flammability test.

### 4. Evaluation of nonflammability

The nonflammability of the sound-absorbing material was measured according to standard UL94 vertical burn test.

### 5. Evaluation of sound-absorbing property

The sound-absorbing property of the sound-absorbing material was measured according to standard ISO 354 method.

### 6. Evaluation of air permeability

### 1) Evaluation method

The test sample was mounted on a Frazier-type tester and the amount of air flowing through the test sample vertically was measured. The area of the test sample through which air passed was 5 cm² and the applied pressure was set to 125 pascal (Pa).

### Test Example 1. Comparison of properties of sound-absorbing materials depending on types of heat-resistant fibers

In Test Example 1, the physical properties of sound-absorbing materials prepared with different heat-resistant fiber yarns were compared. Nonwoven fabrics having a density of 300 g/m² and a thickness of 6 mm were prepared by needle punching and sound-absorbing materials were prepared by immersing in a binder solution, drying and then shaping as described in Example 1. The nonwoven fabrics were prepared using yarns having a fineness of 2 denier and a length of 51 mm, which are described in Table 1.

The physical properties of the sound-absorbing material test samples were measured as described above. The results of measuring the properties of the sound-absorbing materials prepared with different heat-resistant fibers are shown in Table 1 and Table 2.

**[Table 1]**

| | | Yarn 1 | Yarn 2 | Yarn 3 | Yarn 4 | Yarn 5 | Yarn 6 | Yarn 7 |
|---|---|---|---|---|---|---|---|---|
| Yarn | Yarn materia l | Aramid | PPS | PI | PBI | PBO | Oxi-PAN | PK |
| | Limitin g oxygen index | 40 | 30 | 50 | 40 | 60 | 65 | 30 |
| | Heat resista nce temper ature (ºCx1 hr) | 300 | 230 | 300 | 300 | 300 | 300 | 300 |
| Heat resist ance | Appear ance | No abnormali ty | No abnorma lity | No abnormal ity | No abnormal ity | No abnormal ity | No abnormal ity | No abnormal ity |
| | Tensile strengt h (Kgf/c m²) | 200 | 180 | 220 | 200 | 210 | 210 | 200 |
| Ther mal cycle | Appear ance | No abnormali ty | No abnorma lity | No abnormal ity | No abnormal ity | No abnormal ity | No abnormal ity | No abnormal ity |
| Flame retardancy | | Self-extin guishing | Self-exti nguishin g | Self-extin guishing | Self-extin guishing | Self-extin guishing | Self-extin guishing | Self-extin guishing |
| Nonflammability | | Nonflammable | Nonflammable | Nonflammable | Nonflammable | Nonflammable | Nonflammable | Nonflammable |

**[Table 2]**

| Frequency (Hz) | Sound-absorbing rate | | | |
|---|---|---|---|---|
| | Yarn 1 (aramid) | Yarn 2 (PPS) | Yarn 6 (oxi-PAN) | Yarn 7 (PK) |
| 400 | 0.08 | 0.05 | 0.08 | 0.05 |
| 500 | 0.10 | 0.06 | 0.09 | 0.06 |
| 630 | 0.16 | 0.09 | 0.13 | 0.08 |
| 800 | 0.23 | 0.15 | 0.22 | 0.19 |
| 1000 | 0.35 | 0.30 | 0.35 | 0.26 |
| 1250 | 0.44 | 0.39 | 0.45 | 0.37 |
| 1600 | 0.59 | 0.49 | 0.57 | 0.31 |
| 2000 | 0.70 | 0.66 | 0.68 | 0.48 |
| 2500 | 0.79 | 0.71 | 0.80 | 0.67 |
| 3150 | 0.83 | 0.80 | 0.85 | 0.78 |
| 4000 | 0.86 | 0.83 | 0.88 | 0.84 |
| 5000 | 0.99 | 0.95 | 0.92 | 0.83 |
| 6300 | 0.98 | 0.96 | 0.98 | 0.89 |
| 8000 | 0.99 | 0.95 | 0.89 | 0.95 |
| 10000 | 0.98 | 0.97 | 0.99 | 0.95 |

As seen from Table 1 and Table 2, all the sound-absorbing materials prepared using heat-resistant fibers having a limiting oxygen index of 25% or greater and a heat resistance temperature of 150 ºC or greater according to an exemplary embodiment of the present invention may obtain satisfactory heat resistance, durability, flame retardancy, nonflammability and sound-absorbing property. Accordingly, conventionally used heat-resistant fibers, i.e. super fiber, may be used as the material of the nonwoven fabric of the sound-absorbing material according to an exemplary embodiment of the present invention.

### Test Example 2. Comparison of properties of sound-absorbing materials depending density of nonwoven fabric

In Test Example 2, sound-absorbing material test samples were prepared as described in Example 1 using nonwoven fabrics having different densities. The sound-absorbing performance of the sound-absorbing material test samples are shown in Fig. 4.

As seen from Fig. 4, the sound-absorbing performance of the sound-absorbing material may be superior when a nonwoven fabric having a density of 600 g/m² may be used in comparison to a nonwoven fabric having a density of 300 g/m².

### Test Example 3. Evaluation of physical properties of sound-absorbing materials

In Test Example 3, the properties of sound-absorbing material test samples depending on the method by which a thermosetting binder may be applied to a nonwoven fabric were compared.

Accordingly, the sound-absorbing rate of the sound-absorbing material test samples prepared by impregnating (Example 1) and coating (Comparative Example 2) the thermosetting binder were compared. The results of measuring the sound-absorbing rate of the sound-absorbing material formed of a nonwoven fabric (Comparative Example 1), the sound-absorbing material on which the thermosetting binder was coated (Comparative Example 2) and sound-absorbing material wherein the thermosetting binder was impregnated into the nonwoven fabric (Example 1) are shown in Table 3.

**[Table 3]**

| Frequency (Hz) | Sound-absorbing rate | | |
|---|---|---|---|
| | Comparative Example 1 (nonwoven fabric) | Comparative Example 2 (binder-coated nonwoven fabric) | Example 1 (binder-impregnated nonwoven fabric) |
| 400 | 0.01 | 0.02 | 0.08 |
| 500 | 0.03 | 0.03 | 0.10 |
| 630 | 0.12 | 0.05 | 0.16 |
| 800 | 0.16 | 0.08 | 0.23 |
| 1000 | 0.26 | 0.12 | 0.35 |
| 1250 | 0.32 | 0.15 | 0.44 |
| 1600 | 0.39 | 0.22 | 0.59 |
| 2000 | 0.48 | 0.29 | 0.70 |
| 2500 | 0.64 | 0.40 | 0.79 |
| 3150 | 0.63 | 0.57 | 0.83 |
| 4000 | 0.72 | 0.68 | 0.86 |
| 5000 | 0.80 | 0.77 | 0.99 |
| 6300 | 0.78 | 0.82 | 0.98 |
| 8000 | 0.89 | 0.98 | 0.99 |
| 10000 | 0.90 | 0.98 | 0.98 |

As seen from Table 3, the sound-absorbing material of Example 1 according to an exemplary embodiment of the present invention may have superior sound-absorbing rate in all frequency ranges in comparison to the sound-absorbing material of Comparative Example 1 wherein the nonwoven fabric not impregnated with a thermosetting binder was used. In contrast, the sound-absorbing material of Comparative Example 2 of which the thermosetting binder was coated on the nonwoven fabric may have reduced sound-absorbing rate than the nonwoven fabric (Comparative Example 1) in the frequency range of 400 Hz to 5000 Hz.

### Test Example 4. Evaluation of heat-insulating performance of sound-absorbing materials

In Test Example 4, the heat-insulating performance of each sound-absorbing material test sample prepared in Example 1 (thermosetting resin-impregnated aramid nonwoven fabric), Comparative Example 1 (aramid nonwoven fabric) or Comparative Example 3 (thermoplastic resin-impregnated aramid nonwoven fabric) was evaluated. After applying heat of 1000 ºC from one side of 25 mm thick sample of each sound-absorbing material for 5 minutes, temperature was measured on the opposite side of the sample.

The temperature measured on the opposite side of the sound-absorbing material was 250 ºC for Example 1 and 350 ºC for Comparative Example 1. Accordingly, the sound-absorbing material according to an exemplary embodiment of the present invention of which the thermosetting resin was improved may have improved heat-insulating performance. In contrast, the thermoplastic resin-impregnated sound-absorbing material test sample of Comparative Example 3 was melt down as soon as the heat of 1000 ºC was applied.

Accordingly, the sound-absorbing material according to an exemplary embodiment of the present invention may obtain superior heat-insulating property.

### Test Example 5. Comparison of heat-insulating performance with aluminum heat-insulating plate

In Test Example 5, the heat-insulating performance of the sound-absorbing material of Example 1 was compared with that of the aluminum heat-insulating plate. While applying the same heat from one side of the sound-absorbing material and the heat-insulating plate at 250 ºC, the temperature at the opposite side of the sound-absorbing materials was measured with time. The results are shown in Fig. 5.

As seen from Fig. 5, the sound-absorbing material according to an exemplary embodiment of the present invention may have improved heat-insulating performance by lowering the transferred temperature at least by 11 ºC as compared to the aluminum heat-insulating plate.

### Test Example 6. Comparison of properties of sound-absorbing material depending on binder content

Sound-absorbing material test samples were prepared as described in Example 1. The epoxy resin-impregnated aramid nonwoven fabric was dried to have different contents of the final binder. The binder content may be represented as parts by weight of the binder included in the sound-absorbing material based on 100 parts by weight of the dried nonwoven fabric.

The results of comparing the mechanical properties and sound-absorbing rate of the sound-absorbing materials of Examples and Comparative Examples with different binder contents are shown in Table 4 and Table 5.

**[Table 4]**

| | Physical properties of sound-absorbing materials with different binder contents | | | | |
|---|---|---|---|---|---|
| Binder content (parts by weight) | 0 | 10 | 50 | 100 | 200 |
| Air permeability (mL/cm²·s) | 500 | 380 | 350 | 320 | 210 |
| Tensile strength (kg/cm²) | 40 | 60 | 200 | 240 | 310 |
| Flammability | Nonflammable | Nonflammable | Nonflammable | Nonflammable | Nonflammable |

**[Table 5]**

| Frequency (Hz) | Sound-absorbing rate of sound-absorbing materials with different binder contents | | | | |
|---|---|---|---|---|---|
| | 0 parts by weight | 10 parts by weight | 50 parts by weight | 100 parts by weight | 200 parts by weight |
| 400 | 0.01 | 0.01 | 0.08 | 0.06 | 0.02 |
| 500 | 0.03 | 0.04 | 0.10 | 0.09 | 0.04 |
| 630 | 0.12 | 0.14 | 0.16 | 0.15 | 0.09 |
| 800 | 0.16 | 0.17 | 0.23 | 0.25 | 0.11 |
| 1000 | 0.26 | 0.26 | 0.35 | 0.30 | 0.14 |
| 1250 | 0.32 | 0.34 | 0.44 | 0.42 | 0.17 |
| 1600 | 0.39 | 0.41 | 0.59 | 0.54 | 0.22 |
| 2000 | 0.48 | 0.55 | 0.70 | 0.58 | 0.35 |
| 2500 | 0.64 | 0.68 | 0.79 | 0.67 | 0.44 |
| 3150 | 0.63 | 0.69 | 0.83 | 0.72 | 0.52 |
| 4000 | 0.72 | 0.77 | 0.86 | 0.75 | 0.53 |
| 5000 | 0.80 | 0.83 | 0.99 | 0.79 | 0.57 |
| 6300 | 0.78 | 0.88 | 0.98 | 0.80 | 0.63 |
| 8000 | 0.89 | 0.91 | 0.99 | 0.90 | 0.70 |
| 10000 | 0.90 | 0.92 | 0.98 | 0.92 | 0.71 |

In Table 4 and Table 5, the sound-absorbing rate may be improved as the binder is impregnated into the nonwoven fabric in comparison to the nonwoven fabric which is not impregnated with the binder. Therefore, the sound-absorbing rate of the sound-absorbing material may be controlled with the content of the binder.

### Test Example 7. Comparison of properties of sound-absorbing material depending on types of binders

Sound-absorbing materials in which 50 parts by weight of a binder was impregnated based on 100 parts by weight of an aramid nonwoven fabric may be prepared as described in Example 1. The resins described in Table 6 were used as the binder.

The results of comparing the mechanical properties and sound-absorbing rate of the sound-absorbing materials of Examples and Comparative Examples with different binders composition are shown in Table 6.

**[Table 6]**

| | Sound-absorbing rate of sound-absorbing materials with different binders | | | | |
|---|---|---|---|---|---|
| Binder resin | Epoxy | Phenol | Urea | Melamine | Polyurethan e |
| Heat resistance temperature (ºCx1 hr) | 300 | 260 | 190 | 300 | 200 |
| Tensile strength (kg/cm²) | 200 | 165 | 180 | 180 | 170 |
| Flame retardancy | Self-extingu ishing | Self-extingu ishing | Self-extingu ishing | Self-extingu ishing | Self-extingu ishing |
| Flammability | Nonflammable | Nonflammable | Nonflammable | Nonflammable | Nonflammable |

## Claims

1. A sound-absorbing material comprising:
a nonwoven fabric comprising an amount of about 30 wt% to about 100 wt% of a heat-resistant fiber; and
a binder impregnated in the same layer as the nonwoven fabric and maintaining a three-dimensional shape inside the nonwoven fabric, wherein the content of the binder is 30 parts to 150 parts by weight, based on 100 parts by weight of the nonwoven fabric, and
wherein micro cavities having a size in a range of about 1 µm to about 100 µm are formed inside a nonwoven fabric layer and formed by fibers which may be regularly or irregularly arranged with a distance therebetween in a range of about 0.1 µm to about 500 µm inside the nonwoven fabric layer, wherein the binder is a thermosetting resin.

2. The sound-absorbing material according to claim 1, wherein the binder is finely and uniformly distributed on the surface of nonwoven fabric yarns, thereby finely modified micro cavities are formed in the internal structure of the nonwoven fabric.

3. The sound-absorbing material according to claim 1, wherein the heat-resistant fiber has a limiting oxygen index (LOI) of about 25% or greater and a heat resistance temperature in a range of about 150 °C or greater, optionally
wherein the heat-resistant fiber is one or more selected from the group consisting of aramid fiber, polyphenylene sulfide (PPS) fiber, oxidized polyacrylonitrile (oxi-PAN) fiber, polyimide (PI) fiber, polybenzimidazole (PBI) fiber, polybenzoxazole (PBO) fiber, polytetrafluoroethylene (PTFE) fiber, polyketone (PK) fiber, metallic fiber, carbon fiber, glass fiber, basalt fiber, silica fiber and ceramic fiber, preferably an aramid fiber, or wherein the nonwoven fabric is a single-layer nonwoven fabric formed of an aramid fiber having a fineness in a range of about 1 denier to about 15 denier and having a thickness in a range of about 3 mm to about 20 mm, optionally
wherein the nonwoven fabric has a density in a range of about 200 g/m² to about 1200 g/m², or wherein the nonwoven fabric has a density in a range of about 100 g/m² -to about 2000 g/m².

4. The sound-absorbing material according to claim 1, wherein the thermosetting resin is an epoxy resin, optionally selected from one or more members from the group consisting of bisphenol A diglycidyl ether, bisphenol B diglycidyl ether, bisphenol AD diglycidyl ether, bisphenol F diglycidyl ether, bisphenol S diglycidyl ether, polyoxypropylene diglycidyl ether, bisphenol A diglycidyl ether polymer, phosphazene diglycidyl ether, bisphenol A novolac epoxy, phenol novolac epoxy resin and o-cresol novolac epoxy resin.

5. The sound-absorbing material according to claim 4, wherein the epoxy resin is cured in the presence of a curing agent.

6. The sound-absorbing material according to claim 1, wherein the sound-absorbing material is shaped to have a three-dimensional shape to which the sound-absorbing material is applied, optionally
wherein the sound-absorbing material is formed in a single layer or multiple layers.

7. Use of the sound-absorbing material according to claim 1 in a vehicle.

8. A method for preparing a sound-absorbing material, comprising:
immersing a nonwoven fabric comprising an amount of about 30 wt% to about 100 wt% of a heat-resistant fiber in a binder solution; and
drying the nonwoven fabric till the content of the binder is 30 parts to 150 parts by weight, based on 100 parts by weight of the nonwoven fabric,
wherein micro cavities having a size in a range of about 1 µm to about 100 µm are formed inside a nonwoven fabric layer and formed by fibers which may be regularly or irregularly arranged with a distance therebetween in a range of about 0.1 µm to about 500 µm inside the nonwoven fabric layer, wherein the binder is a thermosetting resin.

9. The method for preparing the sound-absorbing material according to claim 8, which further comprises, after said drying the nonwoven fabric, preparing the sound-absorbing material by shaping the dried nonwoven fabric at elevated temperature, preferably further comprising, before said immersing the nonwoven fabric, forming an aramid nonwoven fabric having a thickness in a range of about 3 mm to about 20 mm by needle punching of a heat-resistant aramid fiber having a fineness in a range of about 1 denier to about 15 denier, optionally
wherein the nonwoven fabric is formed by continuously performing up-down needling, down-up needling and up-down needling, further optionally
wherein the nonwoven fabric is formed with a needle stroke in a range of about 30 times/m² to about 350 times/m².

10. The method for preparing the sound-absorbing material according to claim 8, wherein the heat-resistant fiber has a limiting oxygen index (LOI) of about 25% or greater and a heat resistance temperature of about 150 °C or greater,
wherein the heat-resistant fiber is optionally one or more selected from the group consisting of aramid fiber, polyphenylene sulfide (PPS) fiber, oxidized polyacrylonitrile (oxi-PAN) fiber, polyimide (PI) fiber, polybenzimidazole (PBI) fiber, polybenzoxazole (PBO) fiber, polytetrafluoroethylene (PTFE) fiber, polyketone (PK) fiber, metallic fiber, carbon fiber, glass fiber, basalt fiber, silica fiber and ceramic fiber, or wherein the heat-resistant fiber is an aramid fiber having a fineness in a range of about 1 denier to about 15 denier having a yarn length in a range of about 20 mm to about 100 mm, optionally
wherein the nonwoven fabric has a thickness in a range of about 3 mm to about 20 mm and a density in a range of about 100 g/m² to about 2000 g/m².

11. The method for preparing the sound-absorbing material according to any one of claims 8 to 10, wherein the binder is finely and uniformly distributed on the surface of nonwoven fabric yarns, thereby finely modified micro cavities are formed in the internal structure of the nonwoven fabric

12. The method for preparing the sound-absorbing material according to claim 8, wherein the binder solution comprises an amount of about 1wt% to about 60 wt% of a binder, an amount of about 0.1 wt% to about 10 wt% of a curing agent, an amount of about 0.01 wt% to about 5 wt% of a catalyst, an amount of about 1 wt% to about 40 wt% of an additive and a solvent as the remainder, based on the total weight of the binder solution, optionally
wherein the binder solution comprises an amount of about 1 wt% to about 30 wt% of a binder, an amount of about 0.1 wt% to about 10 wt% of a curing agent, an amount of about 0.01 to about5 wt% of a catalyst, an amount of about 1 wt% to about 30 wt% of a flame retardant and an amount of about 40 wt to about 95 wt% of a solvent, based on the total of the binder solution.

13. The method for preparing the sound-absorbing material according to claim 8, wherein the thermosetting resin is an epoxy resin, further optionally
wherein the epoxy resin is one or more selected from the group consisting of bisphenol A diglycidyl ether, bisphenol B diglycidyl ether, bisphenol AD diglycidyl ether, bisphenol F diglycidyl ether, bisphenol S diglycidyl ether, polyoxypropylene diglycidyl ether, bisphenol A diglycidyl ether polymer, phosphazene diglycidyl ether, bisphenol A novolac epoxy, phenol novolac epoxy resin and o-cresol novolac epoxy resin.

14. The method for preparing the sound-absorbing material according to claim 13, wherein the epoxy resin is cured in the presence of a curing agent.

15. A method for reducing noise of a noise-generating device, comprising:
i) checking a three-dimensional structure of the noise-generating device;
ii) preparing and shaping the sound-absorbing material of claim 1 in the three-dimensional structure of the device partially or entirely; and
iii) bringing the sound-absorbing material adjacent to the noise-generating device.

16. Use of the material of anyone of claims 1 to 6 for sound-absorbing.

## Patentansprüche

1. Schallabsorbierendes Material, umfassend:
einen Vliesstoff, der eine Menge von etwa 30 Gew.-% bis etwa 100 Gew.-% einer hitzebeständigen Faser umfasst; und
ein Bindemittel, das in der gleichen Schicht wie der Vliesstoff imprägniert ist und eine dreidimensionale Form innerhalb des Vliesstoffs beibehält, worin der Gehalt des Bindemittels 30 Gewichtsteile bis 150 Gewichtsteile, bezogen auf 100 Gewichtsteile des Vliesstoffs, beträgt, und
wobei Mikrohohlräume mit einer Größe in einem Bereich von etwa 1 µm bis etwa 100 µm innerhalb einer Vliesschicht gebildet und durch Fasern gebildet werden, die regelmäßig oder unregelmäßig mit einem Abstand dazwischen in einem Bereich von etwa 0,1 µm bis etwa 500 µm innerhalb der Vliesschicht angeordnet sein können, worin das Bindemittel ein wärmehärtendes Harz ist.

2. Schallabsorbierendes Material nach Anspruch 1, wobei das Bindemittel fein und gleichmäßig auf der Oberfläche von Vliesstoffgarnen verteilt ist, wodurch fein modifizierte Mikrohohlräume in der Innenstruktur des Vliesstoffes gebildet werden.

3. Schallabsorbierendes Material nach Anspruch 1, worin die hitzebeständige Faser einen begrenzenden Sauerstoffindex (LOI) von etwa 25 % oder mehr und eine Temperatur der Hitzebeständigkeit in einem Bereich von etwa 150 ºC oder mehr aufweist, gegebenenfalls
wobei die hitzebeständige Faser eine oder mehrere ist, ausgewählt aus der Gruppe bestehend aus Aramidfaser, Polyphenylensulfid (PPS)-Faser, oxidierter Polyacrylnitrilfaser (oxi-PAN)-Faser, Polyimid (PI)-Faser, Polybenzimidazol (PBI)-Faser, Polybenzoxazol (PBO)-Faser, Polytetrafluorethylen (PTFE)-Faser, Polyketon (PK)-Faser, Metallfaser, Kohlefaser, Glasfaser, Basaltfaser, Siliziumdioxidfaser und Keramikfaser, vorzugsweise eine Aramidfaser, oder worin der Vliesstoff ein einschichtiger Vliesstoff ist, der aus einer Aramidfaser mit einer Feinheit in einem Bereich von etwa 1 Denier bis etwa 15 Denier und einer Dicke in einem Bereich von etwa 3 mm bis etwa 20 mm gebildet ist, optional
wobei der Vliesstoff eine Dichte in einem Bereich von etwa 200 g/m² bis etwa 1200 g/m² aufweist, oder wobei der Vliesstoff eine Dichte in einem Bereich von etwa 100 g/m² bis etwa 2000 g/m² aufweist.

4. Schallabsorbierendes Material nach Anspruch 1, worin das wärmehärtende Harz ein Epoxidharz ist, das gegebenenfalls ausgewählt ist aus einem oder mehreren Elementen aus der Gruppe bestehend aus Bisphenol A-Diglycidylether, Bisphenol B-Diglycidylether, Bisphenol AD-Diglycidylether, Bisphenol F Diglycidylether, Bisphenol S Diglycidylether, Polyoxypropylen Diglycidylether, Bisphenol A Diglycidylether Polymer, Phosphazen Diglycidylether, Bisphenol A Novolac Epoxy, Phenol Novolac Epoxyharz und o-Kresol Novolac Epoxyharz.

5. Schallabsorbierendes Material nach Anspruch 4, worin das Epoxidharz in Gegenwart eines Härters gehärtet wird.

6. Schallabsorbierendes Material nach Anspruch 1, wobei das schallabsorbierende Material so geformt ist, dass es eine dreidimensionale Form aufweist, auf die das schallabsorbierende Material aufgebracht wird, gegebenenfalls
wobei das schallabsorbierende Material in einer einzigen Schicht oder mehreren Schichten gebildet ist.

7. Verwendung des schallabsorbierenden Materials nach Anspruch 1 in einem Fahrzeug.

8. Verfahren zur Herstellung eines schallabsorbierenden Materials, umfassend:
Eintauchen eines Vliesstoffs, der eine Menge von etwa 30 Gew.-% bis etwa 100 Gew.-% einer hitzebeständigen Faser in eine Binderlösung umfasst; und
Trocknen des Vliesstoffs, bis der Inhalt des Bindemittels 30 bis 150 Gewichtsteile beträgt, bezogen auf 100 Gewichtsteile des Vliesstoffs,
wobei Mikrohohlräume mit einer Größe in einem Bereich von etwa 1 µm bis etwa 100 µm innerhalb einer Vliesschicht gebildet und durch Fasern gebildet werden, die regelmäßig oder unregelmäßig mit einem Abstand dazwischen in einem Bereich von etwa 0,1 µm bis etwa 500 µm innerhalb der Vliesschicht angeordnet sein können, worin das Bindemittel ein wärmehärtendes Harz ist.

9. Verfahren zur Herstellung des schallabsorbierenden Materials nach Anspruch 8, das ferner umfasst, nach dem Trocknen des Vliesstoffs, das schallabsorbierende Material durch Formen des getrockneten Vliesstoffs bei erhöhter Temperatur herzustellen, vorzugsweise ferner umfassend, vor dem Eintauchen des Vliesstoffs, das Bilden eines Aramidvliesstoffs mit einer Dicke in einem Bereich von etwa 3 mm bis etwa 20 mm durch Nadelstichstanzen einer hitzebeständigen Aramidfaser mit einer Feinheit in einem Bereich von etwa 1 Denier bis etwa 15 Denier, wahlweise
wobei der Vliesstoff durch kontinuierliches Durchführen von Up-Down-Nadelung, Down-Down-Nadelung und Up-Down-Nadelung gebildet wird, ferner optional
wobei das Vlies mit einem Nadelhub in einem Bereich von etwa 30 mal/m² bis etwa 350 mal/m² ausgebildet ist.

10. Verfahren zur Herstellung des schallabsorbierenden Materials nach Anspruch 8, worin die hitzebeständige Faser einen begrenzenden Sauerstoffindex (LOI) von etwa 25% oder mehr und eine hitzebeständige Temperatur von etwa 150ºC oder mehr aufweist,
wobei die hitzebeständige Faser optional eine oder mehrere ist, ausgewählt aus der Gruppe bestehend aus Aramidfaser, Polyphenylensulfid (PPS)-Faser, oxidiertem Polyacrylnitril (oxi-PAN).

11. Verfahren zur Herstellung des schallabsorbierenden Materials nach einem der Ansprüche 8 bis 10, worin das Bindemittel fein und gleichmäßig auf der Oberfläche von Vliesstoffgarnen verteilt ist, wodurch fein modifizierte Mikrohohlräume in der Innenstruktur des Vliesstoffs gebildet werden.

12. Verfahren zur Herstellung des schallabsorbierenden Materials nach Anspruch 8, worin die Binderlösung eine Menge von etwa 1 Gew.-% bis etwa 60 Gew.-% eines Bindemittels, eine Menge von etwa 0,1 Gew.-% bis etwa 10 Gew.-% eines Härters, eine Menge von etwa 0,01 Gew.-% bis etwa 5 Gew.-% eines Katalysators, eine Menge von etwa 1 Gew.-% bis etwa 40 Gew.-% eines Additivs und ein Lösungsmittel als Rest, bezogen auf das Gesamtgewicht der Binderlösung, gegebenenfalls umfasst.
wobei die Binderlösung eine Menge von etwa 1 Gew.-% bis etwa 30 Gew.-% eines Bindemittels, eine Menge von etwa 0,1 Gew.-% bis etwa 10 Gew.-% eines Härters, eine Menge von etwa 0,01 bis etwa 5 Gew.-% eines Katalysators, eine Menge von etwa 1 Gew.-% bis etwa 30 Gew.-% eines Flammschutzmittels und eine Menge von etwa 40 Gew.-% bis etwa 95 Gew.-% eines Lösungsmittels, bezogen auf die Summe der Binderlösung, umfasst.

13. Verfahren zur Herstellung des schallabsorbierenden Materials nach Anspruch 8, wobei das wärmehärtende Harz ein Epoxidharz ist, ferner gegebenenfalls
wobei das Epoxidharz eines oder mehrere ist, ausgewählt aus der Gruppe bestehend aus Bisphenol A-Diglycidylether, Bisphenol B-Diglycidylether, Bisphenol AD-Diglycidylether, Bisphenol F-Diglycidylether, Bisphenol S-Diglycidylether, Polyoxypropylen-Diglycidylether, Bisphenol A-Diglycidyletherpolymer, Phosphazen-Diglycidylether, Bisphenol A-Novolac-Epoxy, Phenol-Novolac-Epoxidharz und Okresol-Novol-Epoxidharz.

14. Verfahren zur Herstellung des schallabsorbierenden Materials nach Anspruch 13, worin das Epoxidharz in Gegenwart eines Härters gehärtet wird.

15. Verfahren zur Reduzierung des Geräusches bei einer rauscherzeugenden Vorrichtung, umfassend:
i) Überprüfen einer dreidimensionalen Struktur der geräuscherzeugenden Vorrichtung;
ii) Herstellen und Formen des schallabsorbierenden Materials nach Anspruch 1 in der dreidimensionalen Struktur der Vorrichtung, teilweise oder vollständig; und
iii) Verbringen des schallabsorbierenden Materials in die Nähe der geräuscherzeugenden Vorrichtung.

16. Verwendung des Materials nach den Ansprüchen 1 bis 6 für schallabsorbierende Zwecke.

## Revendications

1. Matériau d'absorption de son comprenant :
une étoffe non tissée comprenant une quantité d'environ 30 % en poids à environ 100 % en poids d'une fibre résistant à la chaleur ; et
un liant imprégné dans la même couche que l'étoffe non tissée et maintenant une forme tridimensionnelle à l'intérieur de l'étoffe non tissée, dans lequel la teneur du liant est de 30 parties à 150 parties en poids par rapport à 100 parties en poids de l'étoffe non tissée, et
dans lequel des microcavités ayant une taille dans une plage d'environ 1 µm à environ 100 µm sont formées à l'intérieur d'une couche d'étoffe non tissée et formées par des fibres qui peuvent être agencées de façon régulière ou irrégulière avec une distance entre elles dans une plage d'environ 0,1 µm à environ 500 µm à l'intérieur de la couche d'étoffe non tissée, dans lequel le liant est une résine thermodurcissable.

2. Matériau d'absorption de son selon la revendication 1, dans lequel le liant est réparti de façon fine et uniforme sur la surface de fils d'étoffe non tissée, des microcavités finement modifiées sont ainsi formées dans la structure interne de l'étoffe non tissée.

3. Matériau d'absorption de son selon la revendication 1, dans lequel la fibre résistant à la chaleur a un indice critique d'oxygène (LOI) d'environ 25 % ou plus et une température de résistance à la chaleur dans une plage d'environ 150 °C ou plus, facultativement
dans lequel la fibre résistant à la chaleur est une ou plusieurs fibres choisies dans le groupe consistant en une fibre d'aramide, une fibre de polysulfure de phénylène (PPS), une fibre de polyacrylonitrile oxydée (oxi-PAN), une fibre de polyimide (PI), une fibre de polybenzimidazole (PBI), une fibre de polybenzoxazole (PBO), une fibre de polytétrafluoroéthylène (PTFE), une fibre de polycétone (PK), une fibre métallique, une fibre de carbone, une fibre de verre, une fibre de basalte, une fibre de silice et une fibre de céramique, de préférence une fibre d'aramide, ou dans lequel l'étoffe non tissée est une étoffe non tissée monocouche formée d'une fibre d'aramide ayant une finesse dans une plage d'environ 1 denier à environ 15 deniers et ayant une épaisseur dans une plage d'environ 3 mm à environ 20 mm, facultativement
dans lequel l'étoffe non tissée a une densité dans une plage d'environ 200 g/m² à environ 1 200 g/m², ou dans lequel l'étoffe non tissée a une densité dans une plage d'environ 100 g/m² à environ 2 000 g/m².

4. Matériau d'absorption de son selon la revendication 1, dans lequel la résine thermodurcissable est une résine époxy, facultativement choisie parmi un ou plusieurs membres du groupe consistant en le diglycidyléther de bisphénol A, le diglycidyléther de bisphénol B, le diglycidyléther de bisphénol AD, le diglycidyléther de bisphénol F, le diglycidyléther de bisphénol S, le diglycidyléther de polyoxypropylène, un polymère de diglycidyléther de bisphénol A, le diglycidyléther de phosphazène, un époxy novolaque de bisphénol A, une résine époxy novolaque phénolique et une résine époxy novolaque o-crésol.

5. Matériau d'absorption de son selon la revendication 4, dans lequel la résine époxy est durcie en présence d'un agent durcissant.

6. Matériau d'absorption de son selon la revendication 1, dans lequel le matériau d'absorption de son est mis en forme pour avoir une forme tridimensionnelle à laquelle est appliqué le matériau d'absorption de son, facultativement dans lequel le matériau d'absorption de son est formé en une monocouche ou de multiples couches.

7. Utilisation du matériau d'absorption de son selon la revendication 1 dans un véhicule.

8. Procédé de préparation d'un matériau d'absorption de son, comprenant :
l'immersion d'une étoffe non tissée comprenant une quantité d'environ 30 % en poids à environ 100 % en poids d'une fibre résistant à la chaleur dans une solution de liant ; et
le séchage de l'étoffe non tissée jusqu'à ce que la teneur du liant soit de 30 parties à 150 parties en poids, par rapport à 100 parties en poids de l'étoffe non tissée,
dans lequel des microcavités ayant une taille dans une plage d'environ 1 µm à environ 100 µm sont formées à l'intérieur d'une couche d'étoffe non tissée et formées par des fibres qui peuvent être agencées de façon régulière ou irrégulière avec une distance entre elles dans une plage d'environ 0,1 µm à environ 500 µm à l'intérieur de la couche d'étoffe non tissée, dans lequel le liant est une résine thermodurcissable.

9. Procédé de préparation du matériau d'absorption de son selon la revendication 8, qui comprend en outre, après ledit séchage de l'étoffe non tissée, la préparation du matériau d'absorption de son par mise en forme de l'étoffe non tissée séchée à une température élevée, comprenant en outre de préférence, avant ladite immersion de l'étoffe non tissée, la formation d'une étoffe non tissée en aramide ayant une épaisseur dans une plage d'environ 3 mm à environ 20 mm par liage par aiguille d'une fibre d'aramide résistant à la chaleur ayant une finesse dans une plage d'environ 1 denier à environ 15 deniers, facultativement
dans lequel l'étoffe non tissée est formée en réalisant en continu un aiguilletage de montée et de descente, un aiguilletage de descente et de montée et un aiguilletage de montée et de descente, facultativement en outre
dans lequel l'étoffe non tissée est formée avec une course d'aiguille dans une plage d'environ 30 fois/m² à environ 350 fois/m².

10. Procédé de préparation du matériau d'absorption de son selon la revendication 8, dans lequel la fibre résistant à la chaleur a un indice critique d'oxygène (LOI) d'environ 25 % ou plus et une température de résistance à la chaleur d'environ 150 °C ou plus,
dans lequel la fibre résistant à la chaleur est facultativement une ou plusieurs fibres choisies dans le groupe consistant en une fibre d'aramide, une fibre de polysulfure de phénylène (PPS), une fibre de polyacrylonitrile oxydée (oxi-PAN), une fibre de polyimide (PI), une fibre de polybenzimidazole (PBI), une fibre de polybenzoxazole (PBO), une fibre de polytétrafluoroéthylène (PTFE), une fibre de polycétone (PK), une fibre métallique, une fibre de carbone, une fibre de verre, une fibre de basalte, une fibre de silice et une fibre de céramique, ou dans lequel la fibre résistant à la chaleur est une fibre d'aramide ayant une finesse dans une plage d'environ 1 denier à environ 15 deniers ayant une longueur de fil dans une plage d'environ 20 mm à environ 100 mm, facultativement
dans lequel l'étoffe non tissée a une épaisseur dans une plage d'environ 3 mm à environ 20 mm et une densité dans une plage d'environ 100 g/m² à environ 2 000 g/m².

11. Procédé de préparation du matériau d'absorption de son selon l'une quelconque des revendications 8 à 10, dans lequel le liant est réparti de façon fine et uniforme sur la surface de fils d'étoffe non tissée, des microcavités finement modifiées sont ainsi formées dans la structure interne de l'étoffe non tissée.

12. Procédé de préparation du matériau d'absorption de son selon la revendication 8, dans lequel la solution de liant comprend une quantité d'environ 1 % en poids à environ 60 % en poids d'un liant, une quantité d'environ 0,1 % en poids à environ 10 % en poids d'un agent durcissant, une quantité d'environ 0,01 % en poids à environ 5 % en poids d'un catalyseur, une quantité d'environ 1 % en poids à environ 40 % en poids d'un additif et d'un solvant en tant que reste, par rapport au poids total de la solution de liant, facultativement
dans lequel la solution de liant comprend une quantité d'environ 1 % en poids à environ 30 % en poids d'un liant, une quantité d'environ 0,1 % en poids à environ 10 % en poids d'un agent durcissant, une quantité d'environ 0,01 % à environ 5 % en poids d'un catalyseur, une quantité d'environ 1 % en poids à environ 30 % en poids d'un retardateur de flamme et une quantité d'environ 40 % en poids à environ 95 % en poids d'un solvant, par rapport au total de la solution de liant.

13. Procédé de préparation du matériau d'absorption de son selon la revendication 8, dans lequel la résine thermodurcissable est une résine époxy, facultativement en outre dans lequel la résine époxy est un ou plusieurs éléments choisis dans le groupe consistant en le diglycidyléther de bisphénol A, le diglycidyléther de bisphénol B, le diglycidyléther de bisphénol AD, le diglycidyléther de bisphénol F, le diglycidyléther de bisphénol S, le diglycidyléther de polyoxypropylène, un polymère de diglycidyléther de bisphénol A, le diglycidyléther de phosphazène, un époxy novolaque de bisphénol A, une résine époxy novolaque phénolique et une résine époxy novolaque o-cresol.

14. Procédé de préparation du matériau d'absorption de son selon la revendication 13, dans lequel la résine époxy est durcie en présence d'un agent durcissant.

15. Procédé de réduction de bruit d'un dispositif de génération de bruit, comprenant :
i) la vérification d'une structure tridimensionnelle du dispositif de génération de bruit ;
ii) la préparation et la mise en forme du matériau d'absorption de son de la revendication 1 dans la structure tridimensionnelle du dispositif de façon partielle ou totale ; et
iii) le fait d'amener le matériau d'absorption de son adjacent au dispositif de génération de bruit.

16. Utilisation du matériau de l'une quelconque des revendications 1 à 6 pour absorber le son.
